# EUROPEAN PATENT SPECIFICATION

(11) **EP 2 793 501 B1**
(45) Date of publication and mention of the grant of the patent: **01.05.2019**
(21) Application number: 12857690.7
(22) Date of filing: 10.12.2012
(51) Int. Cl.: H04W 24/02, H04W 24/08

(54) **RADIO PARAMETER CONTROL BASED ON MEASUREMENT INFORMATION REPORTED FROM RADIO TERMINAL WITH A MOVEMENT RANGE WITHIN A PREDETERMINED RANGE**
RADIOPARAMETERREGELUNG AUF DER BASIS VON MESSUNGSINFORMATION AUS EINEM FUNKENDGERÄT MIT EINEM BEWEGUNSBEREICH INNERHALB EINES VORBESTIMMTEN BEREICHS
COMMANDE DE PARAMÈTRE RADIO BASÉ SUR DE L'INFORMATION DE MESURE RAPPORTÉE PAR UN TERMINAL RADIO AVEC UNE ZONE DE MOUVEMENT DANS UNE RÉGION PRÉDÉTERMINÉE

(30) Priority: 13.12.2011 JP 2011271827
(43) Date of publication of application: 22.10.2014
(73) Proprietor: NEC Corporation, Tokyo 108-8001 (JP)
(72) Inventor: KOBAYASHI, Kosei, Tokyo 108-8001 (JP); SUGAHARA, Hiroto, Tokyo 108-8001 (JP)
(74) Representative: MacDougall, Alan John Shaw
(86) International application number: PCT/JP2012/081922
(87) International publication number: WO 2013/089057

(56) References cited:
- EP-A1- 2 066 143
- EP-A1- 2 117 135
- EP-A1- 2 348 764
- WO-A1-2009/047972
- WO-A1-2009/057544
- WO-A1-2010/055721
- WO-A1-2011/083800
- JP-A- 2006 005 597
- JP-A- 2007 288 676
- JP-A- 2010 021 647
- JP-A- 2010 245 583

## Description

### [TECHNICAL FIELD]

The present invention relates to a radio parameter control apparatus, a radio base station, and a radio parameter control method.

### [BACKGROUND ART]

In a cellular radio communication network represented by a mobile phone, a wide service area is formed by distributing and arranging a plurality of radio base stations. Each radio station forms a radio cell, which is an area within which communication with each radio station is possible. Usually, about one to six radio cell(s) is/are managed by one radio base station. In addition, it is possible to continue communication by handover by which adjacent radio cells have an overlap in a part of coverage, even when a radio terminal (User Equipment: UE) moves over the radio cells.

At the time of installing or operating radio base stations, the coverage of a radio cell is optimized so as to reduce the areas in which communication is not possible (Coverage hole), and further improve communication quality of the UE, in particular, throughput. In general, a drive test using dedicated measurement instruments is performed in the field. In the drive test, received power or interference condition of radio waves, an abnormal communication cut-off or a handover failure, and throughput are measured. Then, an insufficient area of the received power (Weak coverage), or an area where strong interference is received (Pilot pollution) is specified to adjust a radio parameter for solving such problems. In general, the radio parameter to be adjusted is, for example, an antenna tilt angle of a radio cell, an antenna azimuth angle, transmitted power and a handover parameter.

The coverage optimization for a radio cell based on the above-described drive test causes an increase of operating costs for the radio communication network due to manual measurement and manual tuning operation of a radio parameter. For this reason, there has been proposed a technique for optimizing the coverage of a radio cell autonomously, so as to reduce the costs for optimizing the coverage of the radio cell.

As a technique for optimizing the coverage of a radio cell autonomously, there is CCO (Coverage and Capacity Optimization) in a SON (Self Organizing Network). The SON is a technique for performing parameter settings or optimization for the radio communication network autonomously, each of which is conventionally performed by hand, by analyzing quality measurement data collected from a radio terminal or a radio base station, and has been standardized in 3GPP (3rd Generation Partnership Project) as a technique for reducing CAPEX (Capital Expenditure) or OPEX (Operational Expenditure) for radio communication infrastructures. The CCO is one of usage modes of the SON, and a technique for optimizing the coverage of a radio cell autonomously by collecting the measurement results of radio quality (e.g. RSRP: Reference Signal Received Power, and RSRQ: Reference Signal Received Quality) from the radio terminal and changing a radio parameter (e.g. transmitted power or tilt angle of antenna) of the radio cell.

In addition, as another technique, there is ICIC(Inter-Cell Interference Coordination). The ICIC is a technique for avoiding interference by reducing transmitted power or stopping signal transmission in coordination with between the radio base stations, based on radio quality information reported from a radio terminal.

An example of such techniques is described in Patent Literature 1. The Patent Literature 1 is the invention that relates to a setting method for common channel transmitted power of femtocell, and the measurement results of radio quality by the UE (User Equipment) are processed and utilized in HomeBTS (femtocell) per the UE. For example, an initiate value of CPICH (Common Pilot Channel) transmitted power of HomeBTS is assumed to be the value proportionated to CPICH received power of Macro Cell measured by the HomeBTS. The UE connected to the HomeBTS measures CPICH Ec/No (Received energy per chip divided by the noise power density in the band) and reports it to the Home BTS. The HomeBTS controls the CPICH transmitted power, so as to set the measured value of the CPICH Ec/No reported from the UE close to a predetermined target value. At this time, the HomeBTS obtains a statistical value of the CPICH Ec/No per the UE registered in the HomeBTS, and controls the CPICH transmitted power so as to set the statistical value close to the predetermined target value. As for the statistical value, for example, a minimum value of the CPICH Ec/No is obtained per the UP, or X percent value of cumulative distribution of the CPICH Ec/No is obtained per the UE.

### [CITATION LIST]

### [PATENT LITERATURE]

[PATENT LITERATURE 1]
WO2009/047972
EP2348764 discloses a mobile terminal that includes a measuring unit that measures at least the moving speed of the self terminal and communication quality of wireless communication, and a communication unit that transmits terminal information including moving speed information and communication quality information. A quality monitoring apparatus (90) includes a terminal information collection unit (901) that collects the terminal information from at least one mobile terminal, and a terminal information classification unit (903) and a quality analyzing unit (904) that monitor communication quality in a predetermined target area for each moving speed range of the mobile terminal based on the collected terminal information.

EP2066143 discloses radio cell performance monitoring and/or control in broadband fixed radio access networks (RANs) or broadband cellular mobile radio access networks according to the ETSI/BRAN standard, such as e.g. conventional Universal Terrestrial Radio Access Networks (UTRANs), or any other type of wireless communication network according to the Wi-Fi or WLAN standard (e.g. Bluetooth, IEEE 802.11 or HiperLAN), the GSM/GPRS standard or the UMTS standard. Thereby, continuously monitored user equipment positioning data and radio link parameters indicating the quality of service (QoS) of a wireless link between a base transceiver station (BTS) located in a mobile radio cell of the wireless cellular network and a mobile terminal (MT) connected to and being served by said base transceiver station, such as e.g. the signal-to-noise-plus-interference ratio (SINR), power class and bit error rate (BER) in uplink and/or downlink direction of the wireless link, may be used for radio cell performance monitoring and/or control. By tracking the current positions of all mobile terminals which are served by the network, hereinafter also referred to as user equipment (UE), the network is able to support location-based services offered to these mobile terminals. A network management system (NMS) is disclosed with an integrated alarm signaling unit (ASU), said network management system having access to a base transceiver station's link performance monitoring system (LPMS) and/or location measurement unit (LMU), wherein the latter is used for measuring current UE positioning information signals transmitted from a standard mobile terminal (MT) or specific wireless user equipment (UE) via the air interface of a cellular wireless communication network (such as e.g. a mobile network according to the ETSI/BRAN, GSM, UMTS, Wi-Fi, W-LAN or IEEE 802.11 standard) to a base transceiver station of said network.

WO 2011/083800 discloses a radio terminal, which has a function to collect and report measurement information designated by a radio network, comprises: means for receiving collection/reporting control information related to the radio terminal's execution of at least one of the collection of measurement information and the reporting of the measurement information to the radio network; and control means for executing, based on the collection/reporting control information, at least one of the collection and the reporting if execution determination information, which is related to at least one of the collection of the measurement information and the reporting of the measurement information to be executed by the local terminal, satisfies a given determination criterion.

EP2117135 discloses a base station apparatus to be used in a mobile communication system that includes a report signal receiving unit receiving a report signal from one or more user equipment terminals, a radio parameter adjustment unit adjusting radio parameters based on an analysis result of each report signal, a designation unit designating a report condition to be used for each user equipment terminal to determine whether to transmit the report signal and content to be reported in the report signal, and a report unit reporting the report condition and the content to be reported to the one or more user equipment terminals. Further, in the base station apparatus, the report condition is satisfied when a transmission source of a downlink reference signal is a specific cell, and the content to be reported includes a received quality value of the downlink reference signal.

### [SUMMARY OF INVENTION]

### [TECHNICAL PROBLEM]

By the way, when information such as radio quality measured by radio terminals is collected from the radio terminals, different radio quality is possibly be reported depending on the measured time due to movement of the radio terminals, even collected from the same radio terminal. Accordingly, when averaging such radio quality as to the same radio terminal, there is a danger that the averaged radio quality does not correspond to the radio quality in any area where the radio terminal was present, but indicates the radio quality in the area irrelevant to the radio terminal.

On the other hand, for each measurement report from the radio terminals, it is conceivable that each measurement report is processed individually without performing statistical process such as averaging. However, when processing individually without aggregating measurement reports from the radio terminals, there is a problem that the processing load increases, upon calculation of an optimized value of a radio parameter, using the measurement reports from the radio terminals.

Further, since the measurement reports from the radio terminals in various movement states are mixed, so that it is difficult to optimize a radio parameter suitable for the radio terminal in a specific movement state. For example, in coverage optimization of radio cells, it is difficult to emphasize radio property for the area such as in-store or station where continual communication is performed for a long time. Also, in coverage optimization of handover parameters, it is difficult to emphasize radio property of the radio terminal in a movement state.

Therefore, the present invention is made in view of the foregoing problems, and the purpose thereof is to provide a radio parameter control apparatus, a radio base station, and a radio parameter control method capable of deciding a proper radio parameter.

### [SOLUTION TO PROBLEM]

The present invention is a radio parameter control apparatus for deciding a radio parameter of a radio cell comprising: radio terminal movement judgement means configured to judge whether a movement range of a radio terminal is within a predetermined range and radio parameter decision means configured to decide the radio parameter of the radio cell based on radio terminal measurement information that is reported by the radio terminal of which movement range is within the predetermined range, wherein the radio terminal measurement information is measured by the radio terminal.

The present invention also provides a radio base station comprising the above radio parameter control apparatus.

One example provides a radio terminal comprising: movement state information obtainment unit configured to obtain movement state information indicating whether a movement range of the radio terminal is within a predetermined range; and transmission means configured to include the movement state information in radio terminal measurement information for transmission to a radio base station.

The present invention also provides a radio parameter control method for deciding a radio parameter of a radio cell, method comprising: judging whether a movement range of a radio terminal is within a predetermined range; and deciding the radio parameter of the radio cell based on radio terminal measurement information that is reported by the radio terminal of which the movement range is within the predetermined range, wherein the radio terminal measurement information is measured by the radio terminal.

### [ADVANTAGEOUS EFFECT OF INVENTION]

According to the present invention, using the radio terminal measurement information measured by a radio terminal, a movement state of the radio terminal that has reported the radio terminal measurement information is taken into consideration upon deciding a radio parameter of radio cells. Therefore, it is possible to decide a proper radio parameter.

### [BRIEF DESCRIPTION OF DRAWINGS]

FIG. 1 is a configuration diagram of a radio parameter control system of the present invention;
FIG. 2 is a configuration diagram of a first embodiment;
FIG. 3 is an operational flow chart of a radio parameter control apparatus 30 in the first embodiment;
FIG. 4 is another operational flow chart of the radio parameter control apparatus 30 in the first embodiment;
FIG. 5 an operational flow chart of a radio parameter control apparatus 30 in the second embodiment;
FIG. 6 is a configuration diagram of a third embodiment;
FIG. 7 is configuration diagram of a fourth embodiment;

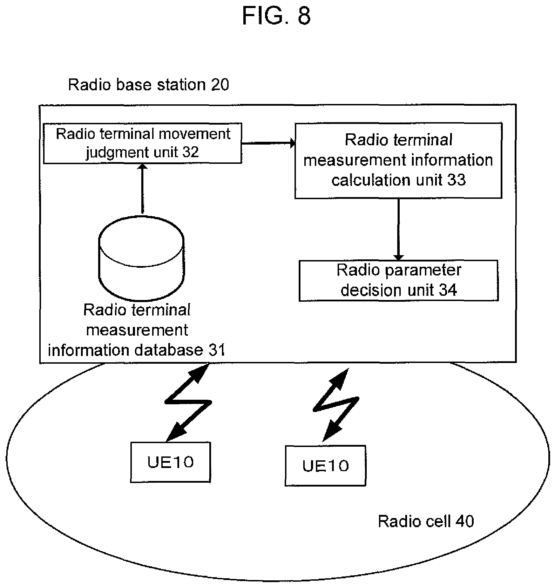

FIG. 8 is a diagram illustrating a modification of each embodiment; and
FIG. 9 is a diagram illustrating a modification of each embodiment.

### [DESCRIPTION OF EMBODIMENTS]

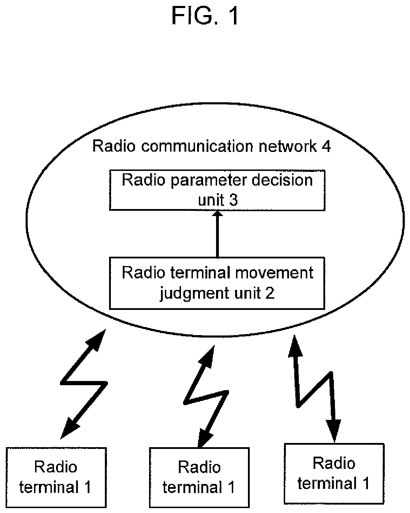

The outline of the present invention will be described. FIG. 1 is a configuration diagram of a radio parameter control system of the present invention.

The radio parameter control system of the present invention includes a radio terminal 1, a radio terminal movement judgment unit 2 and a radio parameter decision unit 3. Note that a radio communication network 4 is a system to provide radio communication services to the radio terminal 1, and includes a radio base station, a radio base station control apparatus and the like. Then, in the following description, the radio communication network 4 includes the radio terminal movement judgment unit 2 and the radio parameter decision unit 3, but it is not limited thereto, as described later. For example, the radio terminal 1 may include the radio terminal movement judgment unit 2.

The radio terminal 1 has a function to measure radio terminal measurement information based on instructions from the radio communication network 4, and transmits the radio terminal measurement information to the radio communication network 4. Here, an example of the radio terminal measurement information measured by the radio terminal 1 is, for example, radio quality information of downlink signals. The radio quality information is RSRP (Reference Signal Received Power) representing the received power, RSRQ (Reference Signal Received Quality) representing the received quality, SINR (Signal to Interference plus Noise Power Ratio), throughput, and other information similar thereto, as long as LTE (Long Term Evolution).

Further, the radio terminal measurement information may include movement state information for understanding a movement state of the radio terminal 1 at the time of measurement of the radio terminal measurement information, or at any point in time within a predetermined time from the time of measurement thereof. For example, the movement state information includes, for example, the information such as Doppler frequency or a movement speed, directly capable of understanding a movement state, or the information such as location information of the radio terminal (e.g. location information by GPS), indirectly capable of understanding a movement state. Note that, as described later, the movement state information is not necessarily required as long as a movement of the radio terminal 1 is judged by other methods without the movement state information. Also, statistical values of the movement state information obtained over several times in the past, for example, average values may be obtained as the movement state information, which is included in the radio terminal measurement information.

The radio terminal movement judgment unit 2 judges whether largeness of the movement of the radio terminal 1 that has reported the radio terminal measurement information is within a predetermined range. Then, the radio terminal movement judgment unit 2 outputs the judgment results and the radio terminal measurement information measured by the radio terminal 1 to the radio parameter decision unit 3.

As the method for judging that largeness of the movement of the radio terminal 1 is within the predetermined range, when the radio terminal measurement information includes the movement state information, it is judged using the movement state information. For example, when including the information such as Doppler frequency or a movement speed, directly capable of understanding a movement state as the movement state information, the movement is judged using these values. In the case that the movement state information is Doppler frequency, when Doppler frequency is smaller than a predetermined threshold value (e.g. equivalent of movement speed 1.5 km/h), largeness of the movement is judged to be within the predetermined range (no movement). Also, in the case that the movement state information is the information such as location information, indirectly capable of understanding a movement state, when a fluctuation range of location within a predetermined period is smaller than a predetermined threshold value (e.g. equivalent of movement speed 1.5 km/h), largeness of the movement is judged to be within the predetermined range (no movement). Note that it may partially be judged as within the predetermined range (no movement), or as beyond the predetermined range (there is movement) in the predetermined period described above.

On the other hand, when the radio terminal measurement information does not include the movement state information, it may be judged using the received power of downlink reference signals (reference signals) included in the radio terminal measurement information. As the judgment method, when a fluctuation range of the received power of downlink reference signals within a predetermined period is smaller than a predetermined threshold value, largeness of the movement is judged to be within the predetermined range (no movement). In this regard, only reference signals of a serving cell (radio cell to which radio terminal is connected) may be used, or reference signals of a radio cell different from the serving cell may further be taken into consideration. That is, in the case that a movement state is judged using only a fluctuation range of the received power of one radio cell, when the UE moves on a contour line to be the same distance from a transmission antenna of the radio cell in the sense of radio propagation, no fluctuation of the received power occurs, thereby possibly making a misjudgment as no movement. Therefore, it is possible to enhance judgment accuracy of a movement state of the UE, by further taking a fluctuation of the received power of other radio cells having a low correlation with propagation property of the radio cell into consideration. For example, a radio cell (here, it will be referred to as radio cell set in area different from serving cell) managed by a radio base station different from the radio base station for managing a serving cell may be used. In the case of using both of the reference signals of a serving cell and a radio cell set in the area different from the serving cell, when both of the fluctuation ranges (e.g., top 90 percent values of received power of reference signals minus (-) low 90 percent values of received power of reference signals) are smaller than a predetermined threshold value (e.g. 10dB), largeness of the movement is judged to be within the predetermined range (no movement). Note that it may partially be judged as within the predetermined range (no movement) or as beyond the predetermined range (there is movement) in the predetermined period described above.

The radio parameter decision unit 3 distinguishes between the radio terminal measurement information reported from the radio terminal 1 of which largeness of the movement is within the predetermined range (no movement) and the radio terminal measurement information reported from the radio terminal 1 of which largeness of the movement is beyond the predetermined range (there is movement), and decides a radio parameter of radio cells.

For example, the radio parameter decision unit 3 emphasizes either the radio terminal measurement information reported from the radio terminal 1 of which largeness of the movement is within the predetermined range, or the radio terminal measurement information reported from the radio terminal 1 of which largeness of the movement is beyond the predetermined range, and decides a radio parameter of radio cells.

For example, the radio parameter decision unit 3 decides a radio parameter of radio cells using only terminal measurement information of the radio terminal 1 of which largeness of the movement is within the predetermined range (no movement). Alternatively, the radio parameter decision unit 3 decides a radio parameter of radio cells using only terminal measurement information of the radio terminal 1 of which largeness of the movement is beyond the predetermined range (there is movement).

For example, the radio parameter decision unit 3 puts weight on the number of reports of the radio terminal measurement information of the radio terminal 1 of which largeness of the movement is within the predetermined range (no movement) and the number of reports of the radio terminal measurement information of the radio terminal 1 of which largeness of the movement is beyond the predetermined range (there is movement), so as to emphasize the radio terminal measurement information of the radio terminal 1 of which largeness of the movement is within the predetermined range (no movement), thereby deciding a radio parameter of radio cells. On the contrary, the radio parameter decision unit 3 puts weight on the number of reports of the radio terminal measurement information of the radio terminal 1 of which largeness of the movement is within the predetermined range (no movement) and the number of reports of the radio terminal measurement information of the radio terminal 1 of which largeness of the movement is beyond the predetermined range (there is movement), so as to emphasize the radio terminal measurement information of the radio terminal 1 of which largeness of the movement is beyond the predetermined range (there is movement), thereby deciding a radio parameter of radio cells.

For example, the radio parameter decision unit 3 increases the number of reports of the radio terminal measurement information of the radio terminal 1 of which largeness of the movement is within the predetermined range (no movement) greater than the actual number of reports, and decides a radio parameter of radio cells. Alternatively, the radio parameter decision unit 3 may decrease the radio terminal measurement information of the radio terminal 1 of which largeness of the movement is beyond the predetermined range (there is movement) at a predetermined rate. On the contrary, the radio parameter decision unit 3 increases the number of reports of the radio terminal measurement information of the radio terminal 1 of which largeness of the movement is beyond the predetermined range (there is movement) greater than the actual number of reports, and decides a radio parameter of radio cells. Alternatively, the radio parameter decision unit 3 may decrease the radio terminal measurement information of the radio terminal 1 of which largeness of the movement is within the predetermined range (no movement) at a predetermined rate.

Note that the radio parameter decision unit 3 may average the radio terminal measurement information per radio terminal to decide a radio parameter of radio cells, in addition to processing of the radio terminal measurement information.

Further, as an example as to which of the radio terminal measurement information reported by the radio terminal 1 of which largeness of the movement is within the predetermined range and the radio terminal measurement information reported by the radio terminal 1 of which largeness of the movement is beyond the predetermined range is emphasized, there is a method for comparing the number of reports of the radio terminal measurement information reported by the radio terminal 1 of which largeness of the movement is within the predetermined range with the number of reports of the radio terminal measurement information reported by the radio terminal 1 of which largeness of the movement is beyond the predetermined range to emphasize the radio terminal measurement information having a large number of reports. Obviously, it may preliminary be decided as to which of the radio terminal measurement information is emphasized.

Further, it may preliminary be decided as to which of the radio terminal measurement information reported by the radio terminal 1 of which largeness of the movement is within the predetermined range and the radio terminal measurement information reported by the radio terminal 1 of which largeness of the movement is beyond the predetermined range, and it may be judged whether to perform decision processing of a radio parameter which distinguishes between the radio terminal measurement information reported by the radio terminal 1 of which largeness of the movement is within the predetermined range and the radio terminal measurement information reported by the radio terminal 1 of which largeness of the movement is beyond the predetermined range by comparing the number of reports of the radio terminal measurement information reported by the radio terminal 1 of which largeness of the movement is within the predetermined range with the number of reports of the radio terminal measurement information reported by the radio terminal 1 of which largeness of the movement is beyond the predetermined range. For example, when the number of reports of the radio terminal measurement information to be emphasized is greater than the number of reports of the radio terminal measurement information not to be emphasized, the decision processing of a radio parameter which distinguishes largeness of movement of the radio terminal 1 having reported the radio terminal measurement information is performed. On the other hand, when the number of reports of the radio terminal measurement information to be emphasized is smaller than the number of reports of the radio terminal measurement information not to be emphasized, the decision processing of a radio parameter which distinguishes largeness of movement of the radio terminal 1 having reported the radio terminal measurement information is not performed. Also, in another example, when a ratio of the number of reports of the radio terminal measurement information to be emphasized and the number of reports of the radio terminal measurement information not to be emphasized (the number of reports of the radio terminal measurement information to be emphasized divided by the number of reports of the radio terminal measurement information not to be emphasized) is greater than a predetermined value (e.g. 2), the decision processing of a radio parameter which distinguishes largeness of movement of the radio terminal 1 having reported the radio terminal measurement information may be performed.

As described above, according to the embodiment of the present invention, the radio terminal measurement information reported by the radio terminal 1 of which largeness of the movement is within the predetermined range (no movement) is distinguished from the radio terminal measurement information reported by the radio terminal 1 of which largeness of the movement is beyond the predetermined range (there is movement) to decide a radio parameter of radio cells. Accordingly, it is possible to decide a proper radio parameter according to the circumstances. In particular, it is possible to decide a proper radio parameter in the area where a user performs communication continually, or in the vicinity of the boundary of radio cells taken as a handover target.

Further, the radio terminal measurement information reported by the radio terminal 1 of which largeness of the movement is within the predetermined range (no movement) is distinguished from the radio terminal measurement information reported by the radio terminal 1 of which largeness of the movement is beyond the predetermined range (there is movement) to select the radio terminal measurement information to be used for deciding a radio parameter, thereby being able to reduce the number of processing targets of the radio terminal measurement information. Therefore, it is possible to reduce the processing load upon calculation of an optimized value of a radio parameter.

In addition, in the above-description, the radio terminal movement judgment unit 2 is provided in the radio communication network 4, but the radio terminal movement judgment unit 2 may be provided in the radio terminal 1. In this case, the radio terminal 1 may judge whether largeness of the movement of the radio terminal 1 is within the predetermined range (no movement) or beyond the predetermined range (there is movement), and transmit the radio terminal measurement information including the judgment results to the radio communication network 4. Further, as the results of movement judgment, the radio terminal 1 only when largeness of the movement is within the predetermined range (no movement) or beyond the predetermined range (there is movement) may transmit the radio terminal measurement information to the radio communication network 4. With such a configuration, it is possible to reduce the processing load of the radio communication network 4.

Hereinafter, the specific embodiments will be described.

### <First Embodiment>

In the first embodiment, as an example of which of the radio terminal measurement information reported by the radio terminal of which largeness of the movement is within a predetermined range and the radio terminal measurement information reported by the radio terminal of which largeness of the movement is beyond the predetermined range is emphasized, the example using only the radio terminal measurement information reported by the radio terminal of which largeness of the movement is within the predetermined range will be described.

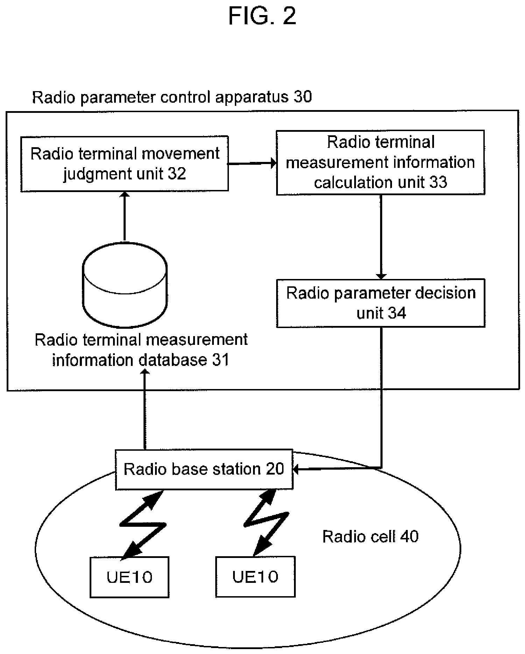

FIG. 2 is a configuration diagram of the first embodiment.

The radio communication system of the first embodiment includes a plurality of radio terminals 10 (hereinafter, UE), a radio bases station 20 and a radio parameter control apparatus 30.

The UE 10 has a function to measure radio quality information as radio terminal measurement information. The radio quality information includes the measurement results of radio quality of a radio cell (serving cell) connected to the UE 10. Further, the radio quality information may include the measurement results of the radio quality of surrounding radio cells other than a serving cell of the UE 10. A typical example of the radio quality measured by the UE 10 is received quality of radio signals (downlink signals) transmitted from the radio base station 20.

The received quality information is, for example, received power of downlink pilot signals or downlink reference signals (reference signals), or SINR (Signal to Interference plus Noise Power Ratio). In the case of W-CDMA, the radio quality measured by the UE 10 is received power (CPCIH RSCP (Received Signal Code Power)) of a common pilot channel (CPICH) per radio cell, or a ratio of energy per chip of the CPICH to in-band received power density (EC/No). Further, in the case of LTE (Long Term Evolution), the radio quality measured by the UE 10 is received power (RSRP: Reference Signal Received Power) of the downlink reference signals, or received quality (RSRQ: Reference Signal Received Quality) thereof.

Further, the radio quality information may include communication quality such as throughput or BLER (Block Error Rate), event information such as whether or not an abnormal cut-off rate and a handover failure will occur, the time at which the UE measures the radio quality, an identifier of the radio cell 40 corresponding to each radio quality, and an UE 10's identifier.

Then, the UE 10 transmits the measured radio quality information, as the radio terminal measurement information, to the radio base station 20.

The radio base station 20 manages the radio cell 40 and performs bidirectional radio communication with a plurality of the UEs 10. Then, the radio base station 20 has a function to not only collect the radio terminal measurement information (radio quality information) measured by the UE 10 under the control of the radio base station 20, and but notify the radio parameter control apparatus 30 of the radio quality information. The radio base station 20 may also notify the radio parameter control apparatus 30 of performance counter information (e.g. the number of communication occurrences, the number of handovers, a usage rate of resource blocks and the like). Further, the radio base station 20 has a function to change a radio parameter of the radio base station 20, or a radio parameter of radio cells managed by the radio base station 20 according to the radio parameter decision results in the radio parameter control apparatus 30. Note that, in FIG. 2, the mode in which each radio base station 20 manages one radio cell 40 is described, but it is not limited thereto. That is, the mode in which each radio base station 20 manages a plurality of radio cells 40 may be possible.

The radio parameter control apparatus 30 has a function to decide a radio parameter of the radio cell 40 based on the radio terminal measurement information (radio quality information) or performance counter information reported from the radio base station 20, and notify the radio base station 20 managing the radio cell of the results. Then, the radio parameter control apparatus 30 includes a radio terminal measurement information database 31, a radio terminal movement judgment unit 32, a radio terminal measurement information calculation unit 33 and a radio parameter decision unit 34.

The radio terminal measurement information database 31 is a database that registers the radio terminal measurement information (radio quality information) or performance counter information reported from the radio base station 20. The radio terminal measurement information database 31 may store each of the information corresponding to the measured time. Also, the radio terminal measurement information database 31 may store the results calculated by the radio terminal measurement information calculation unit 33.

The radio terminal movement judgment unit 32 judges whether largeness of movement of the UE 10 is within the predetermined range. In the embodiment, the radio terminal movement judgment unit 32 judges using received power of the downlink signals, which is one piece of the radio quality information. As the judgment method, when a fluctuation range of the received power of the downlink reference signals within a predetermined period is smaller than a predetermined threshold value, the radio terminal movement judgment unit 32 judges that largeness of the movement is within the predetermined range (no movement). In this regard, as described above, the radio terminal movement judgment unit 32 may use only reference signals of a serving cell (radio cell to which radio terminal is connected), or may further take reference signals of a radio cell set in the area different from the serving cell into consideration. For example, in the case of using both of the reference signals of a serving cell and a radio cell set in the area different from the serving cell, when both of the fluctuation ranges (e.g., top 90 percent values of received power of reference signals minus (-) low 90 percent values of received power of reference signals) are smaller than a predetermined threshold value (e.g. 10dB), the radio terminal movement judgment unit 32 judges that largeness of the movement is within the predetermined range (no movement). Note that the radio terminal movement judgment unit 32 may partially judge as within the predetermined range (no movement) or as beyond the predetermined range (there is movement) in the predetermined period described above.

The radio terminal measurement information calculation unit 33 calculates the radio terminal measurement information (radio quality information) in response to the judgment results of the radio terminal movement judgment unit 32, and registers the radio terminal measurement information (radio quality information) to be an evaluation target upon deciding a radio parameter, in the database of the radio terminal measurement information calculation unit 33. Specifically, the radio terminal measurement information calculation unit 33 registers only the radio terminal measurement information (radio quality information) reported by the UE 10 of which largeness of the movement is judged to be within the predetermined range (no movement) in the database thereof, but does not register the radio terminal measurement information (radio quality information) reported by the UE 10 of which largeness of the movement is judged to be beyond the predetermined range (there is movement). Further, the radio terminal measurement information calculation unit 33 may distinguish between the radio terminal measurement information (radio quality information) reported by the UE 10 of which largeness of the movement is judged to be within the predetermined range (no movement) and the radio terminal measurement information (radio quality information) reported by the UE 10 of which largeness of the movement is judged to be beyond the predetermined range (there is movement) to register therein. As the distinguishing method, the radio terminal measurement information calculation unit 33 may set a flag to the radio terminal measurement information (radio quality information) reported by the UE 10 of which largeness of the movement is judged to be within the predetermined range (no movement) to register therein. As to the radio terminal measurement information (radio quality information) reported by the UE 10 of which largeness of the movement is judged to be within the predetermined range (no movement), the radio terminal measurement information calculation unit 33 may average multiple pieces of the radio quality information reported from the UE 10 so as to compress data size. In this regard, it is preferable to store the number of radio quality information used for averaging. Note that, upon deciding a radio parameter, the radio terminal measurement information (radio quality information) to be an evaluation target may be registered in the radio terminal measurement information database 31.

The radio parameter decision unit 34 decides a radio parameter of the radio cell 40 using the calculation results of the radio terminal measurement information by the radio terminal measurement information calculation unit 33, or performance counter information collected from the radio base station 20. In the embodiment, of the radio terminal measurement information (radio quality information) calculated by the radio terminal measurement information calculation unit 33, the radio parameter decision unit 34 decides a radio parameter taking the radio terminal measurement information (radio quality information) reported by the UE 10 of which largeness of the movement is judged to be within the predetermined range (no movement) as an evaluation target upon deciding the radio parameter.

For example, the radio parameter decision unit 34 predicts communication quality (e.g. throughput) per the radio terminal measurement information (radio quality information) reported by the UE 10 of which largeness of the movement is judged to be within the predetermined range (no movement), the radio terminal measurement information distinctively registered by the radio terminal measurement information calculation unit 33, and decides a radio parameter of the radio cell 40 so as to improve the communication quality.

A specific example of the method for predicting communication quality will be described. Here, the case in which the received power (RSRP) per radio cell is included as the radio terminal measurement information to decide the transmitted power of a radio cell as a radio parameter will be described. By the following method described below, the radio parameter decision unit predicts throughput of the transmitted power per candidate value on per the radio terminal measurement information basis, targeting the radio terminal measurement information (radio quality information) reported by the UE 10 of which largeness of the movement is judged to be within the predetermined range (no movement).

The received power per radio cell (RSRP [dBm]) included in the radio terminal measurement information is assumed as (RSRPs, RSRPn1, RSRPn2,.., RSRPni). Here, RSRPs represents RSRP of a radio cell, which is a target for deciding a radio parameter (hereinafter, control targeted radio cell). Further, RSRPn1, RSRPn2,.., RSRPni represent RSRP of each radio cell from surrounding radio cells 1 to i.

Firstly, the radio parameter decision unit 34 predicts RSRP per radio cell when it is assumed that transmitted power of the control targeted radio cell is changed from the current Pr[dBm] to the candidate value Pc[dBm]. For example, assuming that only RSRP (RSRPs) of the control targeted radio cell is changed by a change amount of the transmitted power, it can be predicted as (RSRPs-(Pr-Pc), RSRPn1, RSRPn2,..., RSRPni).

Next, the above-predicted results are arranged in descending order to assume the results that convert a unit of RSRP from a decibel value (dBm) to a real value (mW) as (S1, I1, I2,...Ini). At this time, since a radio cell corresponding to S1 is the radio cell with the highest RSRP when it is assumed that transmitted power of the control targeted radio cell is changed, so that it can be considered as a serving cell when changing the transmitted power.

SINR of the radio terminal measurement information when it is assumed that the transmitted power of the control targeted radio cell is changed to a candidate value Pc [dBm] can be predicted as SINR=S1/(I1+I2+...+Ini+NOISE). Note that NOISE represents thermal noise [mW]. For the following description, the results that convert the SINR to the decibel value (dB) are assumed as SINR'.

Throughput (TP) of the radio terminal measurement information when it is assumed that transmitted power of the control targeted radio cell is changed to a candidate value Pc [dBm] can be predicted as TP=B x Log₂(1+SINR') x α, using the Shannon-Hartley theorem well known by those skilled in the art. Here, B is a constant number that indicates a system bandwidth [Hz], and α is a constant number that indicates a deterioration amount from theoretical limitation, which is generated depending on implementation of receivers and the like.

As described above, the radio parameter decision unit predicts throughput per the radio terminal measurement information on a candidate value basis of the radio parameter, and decides candidate values of the radio parameter which is most expected to improve throughput. Note that the decision method of a radio parameter described herein is simply the example, so that a scope of the invention is not limited thereto. That is, any method that decides a radio parameter using the radio terminal measurement information is possible.

Next, operations of the radio parameter control apparatus 30 of the first embodiment will be described.

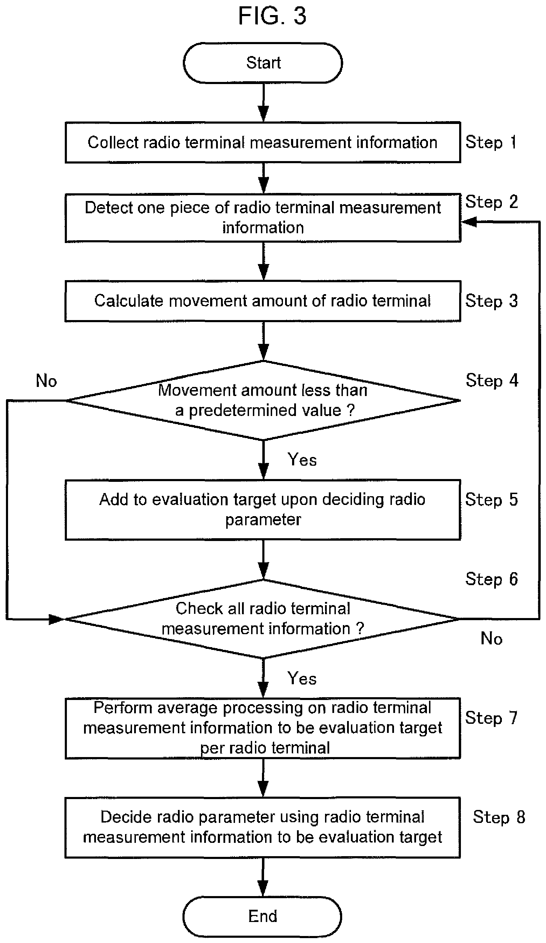

FIG. 3 is an operational flow chart of the radio parameter control apparatus 30 in the first embodiment.

Firstly, the radio parameter control apparatus 30 collects the radio terminal measurement information collected by the radio base station 20 (Step 1). The collected radio terminal measurement information (radio quality information) is registered in the radio terminal measurement information database 31.

Next, the radio terminal movement judgment unit 32 of the radio parameter control apparatus 30 selects one piece of the radio terminal measurement information (radio quality information) that evaluates a movement amount (largeness of movement) from the radio terminal measurement information database 31 (Step 2). The radio terminal measurement information (radio quality information) herein may be time-series data of the radio terminal measurement information (radio quality information) reported from the same radio terminal, or snapshot data at a point in time.

The radio terminal movement judgment unit 32 calculates a movement amount of the UE 10, using the radio terminal measurement information (radio quality information) (Step 3). Then, the radio terminal movement judgment unit 32 judges whether largeness of the movement of the UE 10 is within the predetermined range (no movement) for the radio terminal measurement information, based on the calculated results (Step 4). For example, the radio terminal movement judgment unit 32 judges whether largeness of the movement of the UE 10 is within the predetermined range (no movement), using received power of the downlink reference signals that is one piece of the radio terminal measurement information (radio quality information). As the judgment method, when a fluctuation range of the received power of the downlink reference signals within a predetermined period is smaller than a predetermined threshold value, the radio terminal movement judgment unit 32 judges that largeness of the movement is within the predetermined range (no movement). In this regard, as described above, the radio terminal movement judgment unit 32 may use only reference signals of a serving cell (radio cell to which radio terminal is connected), or may further take reference signals of a radio cell set in the area different from the serving cell may into consideration. For example, in the case of using both of the reference signals of a serving cell and a radio cell set in the area different from the serving cell, when both of the fluctuation ranges (e.g., top 90 percent values of received power of reference signals minus (-) low 90 percent values of received power of reference signals) are smaller than a predetermined threshold value (e.g. 10dB), the radio terminal movement judgment unit 32 judges that largeness of the movement is within the predetermined range (no movement).

In response to the judgment results of the radio terminal movement judgment unit 32, the radio terminal measurement information calculation unit 33 of the radio parameter control apparatus 30 registers the radio terminal measurement information (radio quality information) of which largeness of the movement is within the predetermined range (no movement) in the database of the radio terminal measurement information calculation unit 33, as an evaluation target upon deciding a radio parameter (Step 5). On the other hand, the radio terminal measurement information calculation unit 33 does not register the radio terminal measurement information (radio quality information) of which largeness of the movement is beyond the predetermined range (there is movement) in the database thereof, because such information is not included as an evaluation target upon deciding a radio parameter. Note that the radio terminal measurement information calculation unit 33 may register the radio terminal measurement information (that is, radio terminal measurement information not included as evaluation target upon deciding radio parameter) of the radio terminal of which largeness of the movement is beyond the predetermined range (there is movement) in the database of the radio terminal measurement information calculation unit 33, in a manner that can be distinguished from the radio terminal measurement information (that is, radio terminal measurement information included as evaluation target upon deciding radio parameter) of the radio terminal of which largeness of the movement is within the predetermined range (no movement).

The radio terminal measurement information calculation unit 33 judges whether the processing from Step 2 to Step 5 is performed for all of the radio terminal measurement information (radio quality information) (Step 6).

When it is judged that the processing from Step 2 to Step 5 is performed for all of the radio terminal measurement information (radio quality information), the radio terminal measurement information calculation unit 33 performs average processing per the radio terminal, targeting the radio terminal measurement information (radio quality information) registered in the radio terminal measurement information calculation unit 33 as an evaluation target upon deciding a radio parameter (Step 7). For example, when the radio terminal measurement information (radio quality information) includes received power (RSRP: Reference Signal Received Power) of the downlink reference signals (reference signal) per radio cell, the radio terminal measurement information calculation unit 33 averages received power of the same radio cell per the radio terminal. Here, statistical processing such as obtaining center values may be performed instead of averaging. Note that this processing is not necessarily required, but may timely be performed.

Then, the radio parameter decision unit 34 of the radio parameter control apparatus 30 decides a radio parameter, using the averaged radio terminal measurement information, and notifies the radio base statin 20 of the results (Step 8).

Note that, in the first embodiment described above, it is described that the example in which only the radio terminal measurement information reported by the radio terminal of which largeness of the movement is within the predetermined range is used, but the radio terminal measurement information reported by the radio terminal of which largeness of the movement is beyond the predetermined range may be emphasized to use only the radio terminal measurement information reported by the radio terminal of which largeness of the movement is beyond the predetermined range.

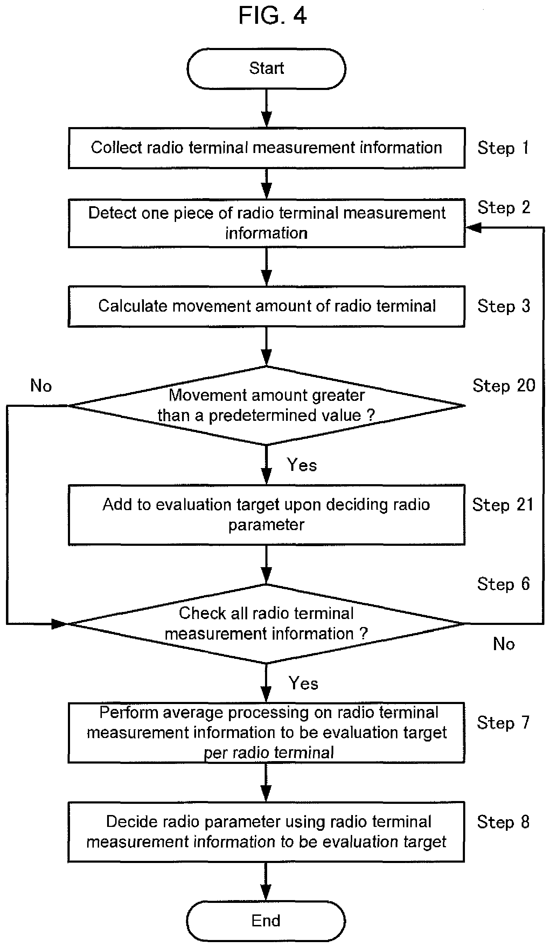

In this case, in the processing from Step 2 to Step 5 described above, contrary to the above-description, the radio terminal measurement information (radio quality information) of which largeness of the movement is beyond the predetermined range (there is movement) is only registered as an evaluation target upon deciding a radio parameter. Then, a radio parameter is decided, using only the radio terminal measurement information reported by the radio terminal of which largeness of the movement is beyond the predetermined range, which is registered as an evaluation target upon deciding a radio parameter. The operations in this case will be described using a flowchart of FIG. 4.

The operations from Step 1 to Step 3 are the same as the ones described above.

The radio terminal movement judgment unit 32 judges whether largeness of the movement of the UE having reported the radio terminal measurement information is beyond the predetermined range (there is movement), based on the calculated results of the movement amount (Step 20).

In response to the judgment results of the radio terminal movement judgment unit 32, the radio terminal measurement information calculation unit 33 of the radio parameter control apparatus 30 registers the radio terminal measurement information (radio quality information) of which largeness of the movement is beyond the predetermined range (there is movement) in the database of the radio terminal measurement information calculation unit 33, as an evaluation target upon deciding a radio parameter (Step 21). On the other hand, the radio terminal measurement information calculation unit 33 does not register the radio terminal measurement information (radio quality information) of which largeness of the movement is within the predetermined range (no movement) in the database, because such information is not included as an evaluation target upon deciding a radio parameter. Note that the radio terminal measurement information calculation unit 33 may register the radio terminal measurement information (that is, radio terminal measurement information not included as evaluation target upon deciding radio parameter) of the radio terminal of which largeness of the movement is within the predetermined range (no movement) in the database of the radio terminal measurement information calculation unit 33, in a manner that can be distinguished from the radio terminal measurement information (that is, radio terminal measurement information included as evaluation target upon deciding radio parameter) of the radio terminal of which largeness of the movement is beyond the predetermined range (there is movement).

The operations after Step 6 are the same as the ones described above, so that the description thereof will be omitted.

In the above description, the case in which the radio terminal measurement information to be emphasized is preliminary decided is described, but without preliminary deciding the radio terminal measurement information to be emphasized, the number of reports of the radio terminal measurement information reported by the UE 10 of which largeness of the movement is within the predetermined range may be compared with the number of reports of the radio terminal measurement information reported by the UE 10 of which largeness of the movement is beyond the predetermined range to emphasize the radio terminal measurement information of the UE 10 with a large number of reports.

Further, in the embodiment described above, it is preliminary decided as to which of the radio terminal measurement information reported by the UE 10 of which largeness of the movement is within the predetermined range and the radio terminal measurement information reported by the UE 10 of which largeness of the movement is beyond the predetermined range is emphasized to decide a radio parameter of radio cells, regardless of the number of reports in each of the information However, in the actual number of reports, the number of reports of the radio terminal measurement information reported by the UE 10 of which largeness of the movement is within the predetermined range may be compared with the number of reports of the radio terminal measurement information reported by the UE 10 of which largeness of the movement is beyond the predetermined range, and it may be judged based on the comparing results whether to perform the decision processing of a radio parameter which distinguishes between the radio terminal measurement information reported by the UE 10 of which largeness of the movement is within the predetermined range and the radio terminal measurement information reported by the UE 10 of which largeness of the movement is beyond the predetermined range.

For example, when the number of reports of the radio terminal measurement information to be emphasized is greater than the number of reports of the radio terminal measurement information not to be emphasized, the decision processing of a radio parameter which distinguishes largeness of the movement of the UE 10 having reported the radio terminal measurement information is performed. On the other hand, when the number of reports of the radio terminal measurement information to be emphasized is smaller than the number of reports of the radio terminal measurement information not to be emphasized, the decision processing of the radio parameter which distinguishes largeness of the movement of the radio terminal 1 having reported the radio terminal measurement information is not performed. Also, in another example, when a ratio of the number of reports of the radio terminal measurement information to be emphasized and the number of reports of the radio terminal measurement information not to be emphasized (the number of reports of the radio terminal measurement information to be emphasized divided by the number of reports of the radio terminal measurement information not to be emphasized) is greater than a predetermined value (e.g. 2), the decision processing of a radio parameter which distinguishes largeness of movement of the radio terminal 1 having reported the radio terminal measurement information may be performed.

By performing the decision processing like this, it is possible to avoid the decision processing of a radio parameter of radio cells against an actual movement state of the UE.

In the first embodiment, a radio parameter is decided, using only either the radio terminal measurement information reported by the radio terminal which is judged as not moving, or the radio terminal measurement information reported by the radio terminal which is judged as moving, thereby being able to decide a proper radio parameter suitable for the area where the measurement is performed, or for a movement state of the radio terminal. Especially, a radio property in the area where a user performs continual communication at rest, or a radio property in the area where a user performs communication with moving, is sufficiently reflected upon deciding a radio parameter.

Further, using only the radio terminal measurement information reported by the radio terminal which is judged as not moving, or the radio terminal measurement information reported by the radio terminal which is judged as moving allows to reduce the number of the radio terminal measurement information to be processed as a target at the time of deciding a radio parameter, thereby being able to reduce the load processing upon calculation of an optimized value of a radio parameter.

### <Second Embodiment>

In the first embodiment described above, the example in which a radio parameter is decided, using only the radio terminal measurement information to be emphasized reported by the radio terminal, is described.

In the second embodiment, an example will be described in which the radio terminal measurement information not to be emphasized is also taken into consideration, while either the radio terminal measurement information reported by the radio terminal of which largeness of the movement is within the predetermined range, or the radio terminal measurement information reported by the radio terminal of which largeness of the movement is beyond the predetermined range is emphasized.

In the following description, for facilitation of understanding, the description will be made, using the example in which the radio terminal measurement information reported by the radio terminal of which largeness of the movement is beyond the predetermined range (there is movement) is also taken into consideration, while emphasizing the radio terminal measurement information reported by the radio terminal of which largeness of the movement is within the predetermined range (no movement), and vice versa. Note that a fundamental configuration is the same as the one of the first embodiment, so that the different configuration will be described.

Where the second embodiment is different from the first embodiment lies in that the radio terminal measurement information calculation unit 33 puts weight on either the radio terminal measurement information reported by the radio terminal (UE 10) of which largeness of the movement is judged to be within the predetermined range (no movement), or the radio terminal measurement information reported by the radio terminal (UE 10) of which largeness of the movement is judged to be beyond the predetermined range (there is movement), and emphasizes the radio terminal measurement information reported by the UE 10 of which largeness of the movement is judged to be within the predetermined range (no movement) more than the radio terminal measurement information reported by the UE 10 of which largeness of the movement is judged to be beyond the predetermined range (there is movement).

As one of the examples, the radio terminal measurement information calculation unit 33 puts weight on the number of reports of the radio terminal measurement information reported by the UE 10 of which largeness of the movement is judged to be within the predetermined range (no movement) to increase the number of reports of the radio terminal measurement information reported by the UE 10 of which largeness of the movement is judged to be within the predetermined range (no movement) greater than the actual number of reports thereof.

In this case, the radio parameter decision unit 34 decides a radio parameter, using the radio terminal measurement information (that is, the radio terminal measurement information reported by the UE 10 of which largeness of the movement is judged to be within the predetermined range (no movement)) of which the number of reports is increased by the radio terminal measurement information calculation unit 33 and the radio terminal measurement information (that is, the radio terminal measurement information reported by the UE 10 of which largeness of the movement is judged to be beyond the predetermined range (there is movement)) of which the number of reports is not changed.

Next, the operations of the radio parameter control apparatus 30 of the second embodiment will be described.

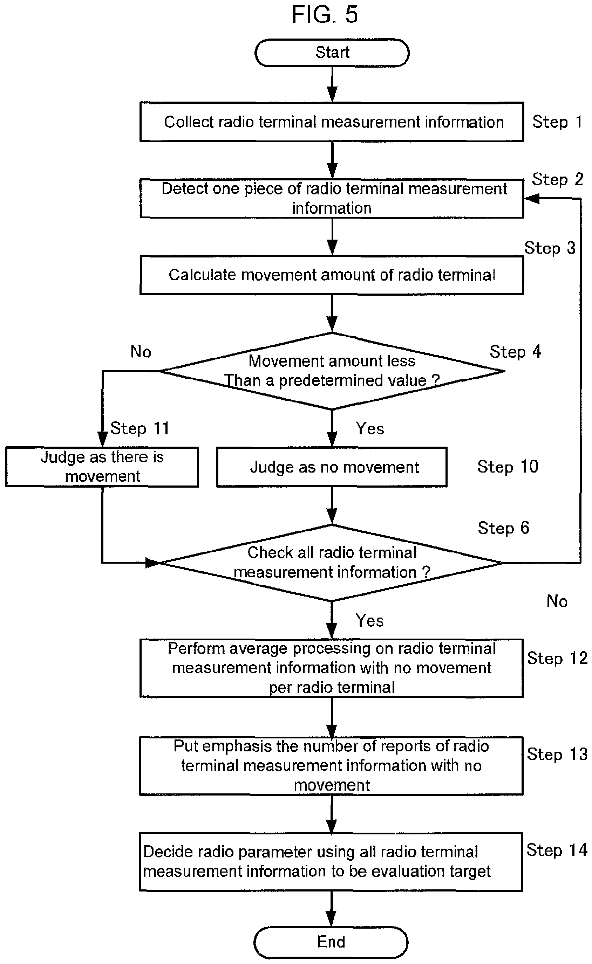

FIG. 5 a flowchart illustrating an example the operations of the radio parameter control apparatus 30 in the second embodiment.

The operations from Step 1 to Step 4 are the same as the ones of the first embodiment.

Next, in response to the judgment results of the radio terminal movement judgment unit 32, the radio terminal measurement information calculation unit 33 of the radio parameter control apparatus 30 distinguishes between the radio terminal measurement information reported by the UE 10 of which largeness of the movement is within the predetermined range (no movement) and the radio terminal measurement information reported by the UE 10 of which largeness of the movement is beyond the predetermined range (there is movement) to register in the data of the radio terminal measurement information calculation unit 33 (Steps 10 and 11). Note that, in the embodiment, the radio terminal measurement information distinguished as either one of them is treated as an evaluation target upon deciding a radio parameter.

It is judged whether either the processing from Step 2 to Step 4 and Step 10, or the processing from Step 2 to Step 4 and Step 11 is performed for all of the radio terminal information (Step 6).

Subsequently, the radio terminal measurement information calculation unit 33 performs averaging processing per the UE 10, targeting the radio terminal measurement information reported by the UE 10 of which largeness of the movement is within the predetermined range (no movement) (Step 12). Note that this processing is not necessarily required, but may timely be performed.

Further, the radio terminal measurement information calculation unit 33 puts weight on the number of reports of the radio terminal measurement information reported by the UE 10 of which largeness of the movement is within the predetermined range (no movement) to increase the number of reports. (Step 13). That is, the radio terminal measurement information calculation unit 33 treats the radio terminal measurement information that is reported actually only once as the one reported several times. Alternatively, the radio terminal measurement information calculation unit 33 may decrease the radio terminal measurement information reported by the UE 10 of which largeness of the movement is beyond the predetermined range (there is movement).

Then, the radio parameter decision unit 34 of the radio parameter control apparatus 30 decides a radio parameter, using all of the radio terminal measurement information to be an evaluation target upon deciding the radio parameter, that is, the radio terminal measurement information (that is, the radio terminal measurement information reported by the UE 10 of which largeness of the movement is judged to be within the predetermined range (no movement)) of which the number of reports is increased and the radio terminal measurement information (that is, the radio terminal measurement information reported by the UE 10 of which largeness of the movement is judged to be beyond the predetermined range (there is movement)) of which the number of reports is not changed, and notifies the radio base station 20 of the results (Step 14).

The other operations are the same as the ones of the embodiments described above, so that the description thereof will be omitted.

Further, as described in the first embodiment, as another example, upon deciding a radio parameter by predicting communication quality (e.g. throughput) per the radio terminal measurement information, it may also be possible to put weight on the communication quality predicted by using the radio terminal measurement information reported by the UE 10 of which largeness of the movement is within the predetermined range (no movement) and the communication quality predicted by using the radio terminal measurement information of the UE 10 of which largeness of the movement is beyond the predetermined range (there is movement), so as to emphasize the radio terminal measurement information of the UE 10 of which largeness of the movement is within the predetermined range (no movement). For example, when it is assumed that an average value of the communication quality predicted by using the radio terminal measurement information reported by the UE 10 of which largeness of the movement is within the predetermined range (no movement) is X, and an average value of the communication quality predicted by using the radio terminal measurement information reported by the UE 10 of which largeness of the movement is beyond the predetermined range (there is movement) is Y, the overall communication quality is evaluated as α • X + β • Y. Here, by making the parameter value α greater than the parameter value β, it is possible to emphasize the radio terminal measurement information reported by the UE 10 of which largeness of the movement is within the predetermined range (no movement).

Note that, in the above description, the case in which it is preliminary decided to emphasize the radio terminal measurement information reported by the UE 10 of which largeness of the movement is within the predetermined range (no movement) is described, but the number of reports of the radio terminal measurement information reported by the UE 10 of which largeness of the movement is within the predetermined range may be compared with the number of reports of the radio terminal measurement information reported by the UE 10 of which largeness of the movement is beyond the predetermined range to emphasize the radio terminal measurement information with a large number of reports.

Further, it may preliminary be decided as to which of the radio terminal measurement information reported by the UE 10 of which largeness of the movement is within the predetermined range and the radio terminal measurement information reported by the UE 10 of which largeness of the movement is beyond the predetermined range is emphasized, and it may be judged whether to perform the decision processing of a radio parameter which distinguishes between the radio terminal measurement information reported by the UE 10 of which largeness of the movement is within the predetermined range and the radio terminal measurement information reported by the UE 10 of which largeness of the movement is beyond the predetermined range, by comparing the number of reports of the radio terminal measurement information reported by the UE 10 of which largeness of the movement is within the predetermined range with the number of reports of the radio terminal measurement information reported by the UE 10 of which largeness of the movement is beyond the predetermined range. For example, when the number of reports of the radio terminal measurement information to be emphasized is greater than the number of reports of the radio terminal measurement information not to be emphasized, the decision processing of a radio parameter which distinguishes largeness of the movement of the UE 10 having reported the radio terminal measurement information is performed. On the other hand, when the number of reports of the radio terminal measurement information to be emphasized is smaller than the number of reports of the radio terminal measurement information not to be emphasized, the decision processing of the radio parameter which distinguishes largeness of the movement of the UE 10 having reported the radio terminal measurement information is not performed. Also, in another example, when a ratio of the number of reports of the radio terminal measurement information to be emphasized and the number of reports of the radio terminal measurement information not to be emphasized (the number of reports of the radio terminal measurement information to be emphasized divided by the number of reports of the radio terminal measurement information not to be emphasized) is greater than a predetermined value (e.g. 2), the decision processing of a radio parameter which distinguishes largeness of the movement of the UE 10 having reported the radio terminal measurement information may be performed.

In the second embodiment, the radio terminal measurement information not be emphasized is also used, while either the radio terminal measurement information reported by the radio terminal of which largeness of the movement is within the predetermined range, or the radio terminal measurement information reported by the radio terminal of which largeness of the movement is beyond the predetermined range is emphasized. Therefore, it is possible to decide a radio parameter, taking a balance of the entire radio cells into consideration, in addition to the effects of the first embodiment.

### <Third Embodiment>

In the first and second embodiments described above, the example in which when the radio terminal measurement information includes only the radio quality information is described.

In the third embodiment, the example in which the radio terminal measurement information includes the movement state information in addition to the radio quality information, and it is judged whether largeness of the movement of the radio terminal is within a predetermined range (no movement) using the movement state information will be described. Note that a fundamental configuration is the same as the one of the embodiments described above, so that the different configuration will be described.

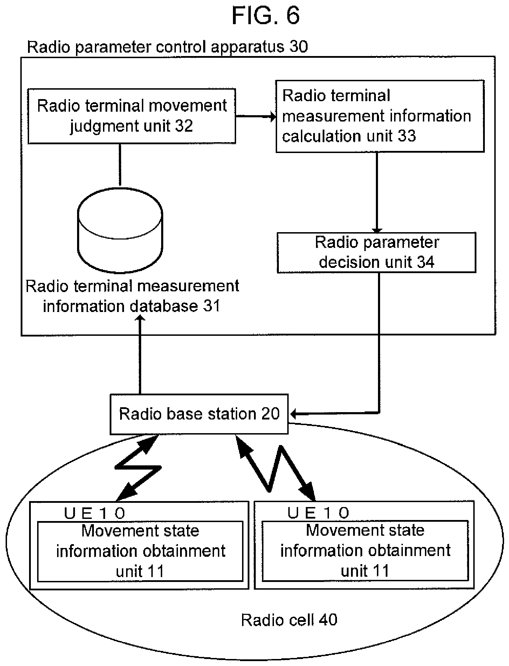

FIG 6 is configuration diagram of the third embodiment. Where the third embodiment is different from the embodiments described above lies in that the radio terminal (UE 10) includes a movement state information obtainment unit 11, which obtains the movement state information about a movement state of the radio terminals.

The movement state information obtainment unit 11 obtains the movement state information about movement of the UE 10 when measuring the radio quality. It is conceivable that the movement state information to be obtained is, for example, the information such as Doppler frequency or a movement speed directly capable of understanding a movement state, or the information such as location information of the radio terminal (e.g. location information by GPS) indirectly capable of understanding a movement state. Note that the timing for obtaining the movement state information is not necessarily when measuring the radio quality, but may be obtained at any point in time within a predetermined time from when measuring the radio quality. Also, an average value of the movement state information obtained over several times in the past may be obtained.

The UE 10 includes in the radio terminal measurement information, the movement state information obtained by the movement state information obtainment unit 11 together with the radio quality information, and transmits them to the radio base station 20.

The radio terminal movement judgment unit 32 judges whether largeness of the movement of the UE 10 is within the predetermined range based on the movement state information. As the method for judging that largeness of the movement is within the predetermined range, when including the movement state information such as Doppler frequency or a movement speed directly capable of understanding a movement state, the movement is judged using these values. For example, in the case that the movement state information is Doppler frequency, when Doppler frequency is smaller than a predetermined threshold value (e.g. equivalent of movement speed 1.5 km/h), largeness of the movement is judged to be within the predetermined range (no movement). Also, in the case that the movement state information is the information such as location information indirectly capable of understanding a movement state, when a fluctuation range of location within a predetermined period is smaller than a predetermined threshold value (e.g. equivalent of movement speed 1.5 km/h), largeness of the movement is judged to be within the predetermined range (no movement). Note that it may partially be judged as within the predetermined range (no movement), or as beyond the predetermined range (there is movement) in the predetermined period described above.

The other operations are the same as the ones of the embodiments described above, so that the description thereof will be omitted.

In the third embodiment, a movement of the radio terminal is judged, using the movement state information obtained in the radio terminal. Therefore, it is possible to reduce the processing of the radio parameter control apparatus 30, in addition to the effects of the embodiments described above. Further, there is an advantage that using the movement state information obtained in the radio terminal enhances the judgment accuracy of whether the radio terminal moves or not.

### <Fourth Embodiment>

In the fourth embodiment, the example in which the radio terminal (UE 10) includes the movement state information obtainment unit 11 that obtains the movement state information about a movement state of the radio terminals, and the radio terminal movement judgment unit 32 will be described. Note that a fundamental configuration is the same as the one of the embodiments described above, so that the different configuration will be described.

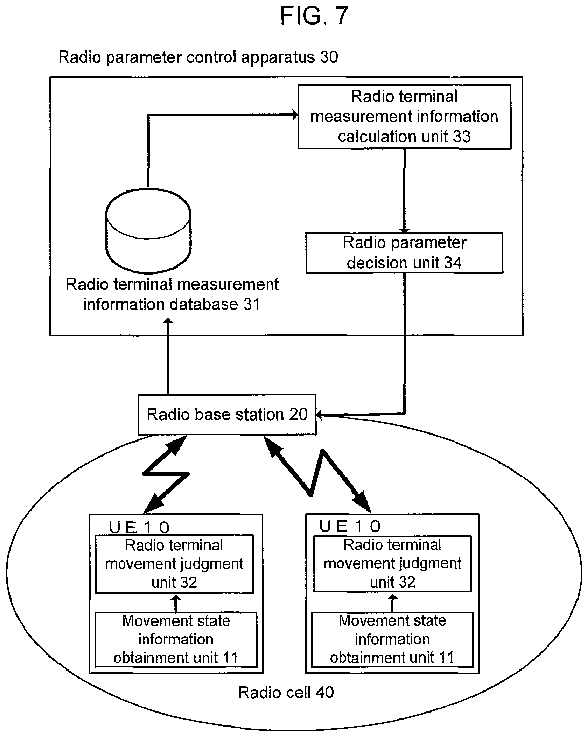

FIG 7 is a configuration diagram of the fourth embodiment.

The radio terminal movement judgment unit 32 of the UE 10 judges whether largeness of the movement of the UE 10 is within the predetermined range based on the movement state information obtained in the movement state information obtainment unit 11. As the method for judging that largeness of the movement is within the predetermined range, for example, when including the movement state information such as Doppler frequency or a movement speed directly capable of understanding a movement state, the movement is judged using these values. For example, in the case that the movement state information is Doppler frequency, when Doppler frequency is smaller than a predetermined threshold value (e.g. equivalent of movement speed 1.5 km/h), largeness of the movement is judged to be within the predetermined range (no movement). Also, in the case that the movement state information is the information such as location information indirectly capable of understanding a movement state, when a fluctuation range of location within a predetermined period is smaller than a predetermined threshold value (e.g. equivalent of movement speed 1.5 km/h), largeness of the movement is judged to be within the predetermined range (no movement). Note that it may partially be judged as within the predetermined range (no movement), or as beyond the predetermined range (there is movement) in the predetermined period described above.

Then, the UE 10 transmits to the radio base station 20, the judgment results of the movement state of the radio terminal movement judgment unit 32 and the radio quality information as the radio terminal measurement information. Note that the UE 10 may transmit the radio quality information, only when judged by the radio terminal movement judgment unit 32 either as no movement, or as there is movement.

In the fourth embodiment, since a movement state is judged in the radio terminal, using the movement state information, so that it is not necessary to judge the movement state in the radio parameter control apparatus 30. Therefore, it is possible to reduce processing load of the radio parameter control apparatus 30, in addition to the effects of the embodiments described above.

### <Modifications of Each Embodiment>

In the embodiments described above, the case in which the radio parameter control apparatus 30 includes the radio terminal measurement information database 31, the radio terminal movement judgment unit 32, the radio terminal measurement information calculation unit 33 and the radio parameter decision unit 34 is described.

However, the radio parameter control apparatus 30 does not necessarily include all of the elements.

For example, as shown in FIG .8, the radio base station 20 may include all of the functions that the radio parameter control apparatus 30 has, that is, may include the radio terminal measurement information database 31, the radio terminal movement judgment unit 32, the radio terminal measurement information calculation unit 33 and the radio parameter decision unit 34. In this case, a control period for radio parameters can be shortened, because the radio parameters of a plurality of base stations are individually optimized per the radio base station.

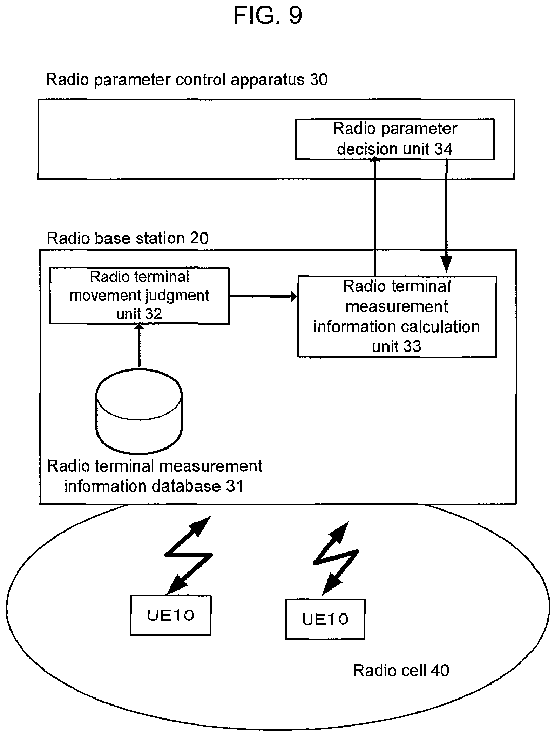

Further, as shown in FIG. 9, the radio base station 20 may include the radio terminal measurement information database 31, the radio terminal movement judgment unit 32 and the radio terminal measurement information calculation unit 33, and the radio parameter control apparatus 30 may include the radio parameter decision unit 34. In this case, it is possible to reduce the amount of transmission data for the radio parameter control apparatus 30, or reduce the load processing in the radio parameter control apparatus, because the radio base station 20 notifies the radio parameter control apparatus 30 of only the calculated radio quality information.

This is the end of the description of the embodiments of the present invention, and as is apparent from the above-descriptions, each unit may be configured with hardware or may be realized by a computer program. In this case, the functions and operations similar to the embodiments described above are realized by a processor that is operated by programs stored in a program memory. Only one part of the above-described functions of the embodiments can be realized with the computer program.

Above, while the present invention has been particularly shown and described with reference to embodiments, the present invention is not limited to the above mentioned embodiments. It will be understood by those of ordinary skill in the art that various changes in form and details may be made therein without departing from the scope of the present invention, as defined by the claims.

This application is based upon and claims the benefit of priority from Japanese patent application No. 2011-271827, filed on Dec. 13, 2011.

### [Reference Signs List]

- 1: Radio terminal
- 2: Radio terminal movement judgment unit
- 3: Radio parameter decision unit
- 4: Radio communication network
- 10: Radio terminal (UE)
- 11: Movement state information obtainment unit
- 20: Radio base station
- 30: Radio parameter control apparatus
- 31: Radio terminal measurement information database
- 32: Radio terminal movement judgment unit
- 33: Radio terminal measurement information calculation unit
- 34: Radio parameter decision unit

## Claims

1. A radio parameter control apparatus (30) for deciding a radio parameter of a radio cell (40) comprising:
radio terminal movement judgment means (32) configured to judge whether a movement range of a radio terminal (1) is within a predetermined range; and
radio parameter decision means (34) configured to decide the radio parameter of the radio cell (40) based on radio terminal measurement information that is reported by the radio terminal of which movement range is within the predetermined range, wherein the radio terminal measurement information is measured by the radio terminal (1).

2. The radio parameter control apparatus (30) according to claim 1, wherein the radio parameter decision means (34) is configured to average the radio terminal measurement information per the radio terminal (1) according to the movement range.

3. The radio parameter control apparatus (30) according to claim 1, wherein the radio terminal measurement information includes radio quality information of the radio cells detected by the radio terminal (1).

4. The radio parameter control apparatus (30) according to claim 3, wherein the radio quality information includes at least any of received power, received quality, a signal to interference plus noise power ratio and throughput.

5. The radio parameter control apparatus (30) according to claim 3, wherein the radio terminal movement judgment means (32) is configured to judge whether the movement range of the radio terminal (1) is within the predetermined range based on the radio quality information.

6. The radio parameter control apparatus (30) according to claim 5, wherein the radio terminal movement judgment means (32) is configured to judge that the movement range of the radio terminal (1) is within the predetermined range when a fluctuation range of radio quality of the radio cell (40) connected to the radio terminal is smaller than a predetermined threshold value.

7. The radio parameter control apparatus (30) according to claim 5, wherein the radio terminal movement judgment means (32) is configured to: use the radio quality of the radio cell (40) connected to the radio terminal (1) and the radio quality of the radio cell set in an area different from the radio cell connected to the radio terminal, and to judge that the movement range of the radio terminal is within the predetermined range when a fluctuation range of both the radio qualities within a predetermined period is less than a predetermined threshold value.

8. The radio parameter control apparatus (30) according to claim 1, wherein the radio terminal movement judgment means (32) is configured to judge whether the movement range of the radio terminal (1) is within the predetermined range based on movement state information about a movement state of the radio terminal, wherein the movement state information is obtained by the radio terminal.

9. The radio parameter control apparatus (30) according to claim 8, wherein the movement state information includes at least any of Doppler frequency, a movement speed of the radio terminal (1), and location information of the radio terminal.

10. A radio base station (20) comprising the radio parameter control apparatus (30) according to any preceding claim.

11. A radio parameter control method for deciding a radio parameter of a radio cell (40), the method comprising:
judging whether a movement range of a radio terminal (1) is within a predetermined range; and
deciding the radio parameter of the radio cell (40) based on radio terminal measurement information that is reported by the radio terminal of which the movement range is within the predetermined range, wherein the radio terminal measurement information is measured by the radio terminal (1).

## Patentansprüche

1. Funkparametersteuervorrichtung (30) zum Bestimmen eines Funkparameters einer Funkzelle (40), mit:
einer Funkendgerätbewegungsbeurteilungseinrichtung (32), die dafür konfiguriert ist, zu beurteilen, ob ein Bewegungsbereich eines Funkendgeräts (1) innerhalb eines vorgegebenen Bereichs liegt; und
einer Funkparameterbestimmungseinrichtung (34), die dafür konfiguriert ist, den Funkparameter der Funkzelle (40) basierend auf Funkendgerätmessinformation zu bestimmen, die durch das Funkendgerät gemeldet wird, dessen Bewegungsbereich innerhalb des vorgegebenen Bereichs liegt, wobei die Funkendgerätmessinformation durch das Funkendgerät (1) gemessen wird.

2. Funkparametersteuervorrichtung (30) nach Anspruch 1, wobei die Funkparameterbestimmungseinrichtung (34) dafür konfiguriert ist, die Funkendgerätmessinformation pro Funkendgerät (1) gemäß dem Bewegungsbereich zu mitteln.

3. Funkparametersteuervorrichtung (30) nach Anspruch 1, wobei die Funkendgerätmessinformation Funkqualitätsinformation der Funkzellen enthält, die durch das Funkendgerät (1) erfasst wird.

4. Funkparametersteuervorrichtung (30) nach Anspruch 3, wobei die Funkqualitätsinformation mindestens eine Information unter einer Empfangsleistung, einer Empfangsqualität, einem Signal-zu-Interferenz-plus-Rausch-Leistungsverhältnis und einem Durchsatz enthält.

5. Funkparametersteuervorrichtung (30) nach Anspruch 3, wobei die Funkendgerätbewegungsbeurteilungseinrichtung (32) dafür konfiguriert ist, basierend auf der Funkqualitätsinformation zu beurteilen, ob der Bewegungsbereich des Funkendgeräts (1) innerhalb des vorgegebenen Bereichs liegt.

6. Funkparametersteuervorrichtung (30) nach Anspruch 5, wobei die Funkendgerätbewegungsbeurteilungseinrichtung (32) dafür konfiguriert ist, zu beurteilen, dass der Bewegungsbereich des Funkendgeräts (1) innerhalb des vorgegebenen Bereichs liegt, wenn ein Schwankungsbereich der Funkqualität der mit dem Funkendgerät verbundenen Funkzelle (40) kleiner ist als ein vorgegebener Schwellenwert.

7. Funkparametersteuervorrichtung (30) nach Anspruch 5, wobei die Funkendgerätbewegungsbeurteilungseinrichtung (32) dafür konfiguriert ist: die Funkqualität der mit dem Funkendgerät (1) verbundenen Funkzelle (40) und die Funkqualität einer Funkzelle zu verwenden, die sich in einem Bereich befindet, der sich von der mit dem Funkendgerät verbundenen Funkzelle unterscheidet, und zu beurteilen, dass der Bewegungsbereich des Funkendgeräts innerhalb des vorgegebenen Bereichs liegt, wenn ein Schwankungsbereich beider Funkqualitäten innerhalb einer vorgegebenen Zeitdauer kleiner ist als ein vorgegebener Schwellenwert.

8. Funkparametersteuervorrichtung (30) nach Anspruch 1, wobei die Funkendgerätbewegungsbeurteilungseinrichtung (32) dafür konfiguriert ist, basierend auf Bewegungszustandsinformation über einen Bewegungszustand des Funkendgeräts zu beurteilen, ob der Bewegungsbereich des Funkendgeräts (1) innerhalb des vorgegebenen Bereichs liegt, wobei die Bewegungszustandsinformation durch das Funkendgerät erhalten wird.

9. Funkparametersteuervorrichtung (30) nach Anspruch 8, wobei die Bewegungszustandsinformation mindestens eine Information unter einer Doppler-Frequenz, einer Bewegungsgeschwindigkeit des Funkendgeräts (1) und Ortsinformation des Funkendgeräts enthält.

10. Funkbasisstation (20) mit der Funkparametersteuervorrichtung (30) nach einem der vorangehenden Ansprüche.

11. Funkparametersteuerverfahren zum Bestimmen eines Funkparameters einer Funkzelle (40), wobei das Verfahren die Schritte aufweist:
Beurteilen, ob ein Bewegungsbereich eines Funkendgeräts (1) innerhalb eines vorgegebenen Bereichs liegt; und
Bestimmen des Funkparameters der Funkzelle (40) basierend auf Funkendgerätmessinformation, die durch das Funkendgerät gemeldet wird, dessen Bewegungsbereich innerhalb des vorgegebenen Bereichs liegt, wobei die Funkendgerätmessinformation durch das Funkendgerät (1) gemessen wird.

## Revendications

1. Appareil de commande de paramètre radio (30) pour décider d'un paramètre radio d'une cellule radio (40) comprenant :
des moyens de jugement de déplacement de terminal radio (32) configurés pour juger si une plage de déplacement d'un terminal radio (1) est dans les limites d'une plage prédéterminée ; et
des moyens de décision de paramètre radio (34) configurés pour décider du paramètre radio de la cellule radio (40) sur la base d'informations de mesure de terminal radio qui sont rapportées par le terminal radio dont la plage de déplacement est dans les limites de la plage prédéterminée, dans lequel les informations de mesure de terminal radio sont mesurées par le terminal radio (1).

2. Appareil de commande de paramètre radio (30) selon la revendication 1, dans lequel les moyens de décision de paramètre radio (34) sont configurés pour moyenner les informations de mesure de terminal radio par terminal radio (1) conformément à la plage de déplacement.

3. Appareil de commande de paramètre radio (30) selon la revendication 1, dans lequel les informations de mesure de terminal radio comprennent des informations de qualité radio des cellules radio détectées par le terminal radio (1).

4. Appareil de commande de paramètre radio (30) selon la revendication 3, dans lequel les informations de qualité radio comprennent au moins l'un quelconque de la puissance reçue, de la qualité reçue, d'un rapport signal sur interférence plus puissance de bruit et d'un débit.

5. Appareil de commande de paramètre radio (30) selon la revendication 3, dans lequel les moyens de jugement de déplacement de terminal radio (32) sont configurés pour juger si la plage de déplacement du terminal radio (1) est dans les limites de la plage prédéterminée sur la base des informations de qualité radio.

6. Appareil de commande de paramètre radio (30) selon la revendication 5, dans lequel les moyens de jugement de déplacement de terminal radio (32) sont configurés pour juger que la plage de déplacement du terminal radio (1) est dans les limites de la plage prédéterminée lorsqu'une plage de fluctuation de la qualité radio de la cellule radio (40) connectée au terminal radio est inférieure à une valeur de seuil prédéterminée.

7. Appareil de commande de paramètre radio (30) selon la revendication 5, dans lequel les moyens de jugement de déplacement de terminal radio (32) sont configurés pour : utiliser la qualité radio de la cellule radio (40) connectée au terminal radio (1) et la qualité radio de l'ensemble de cellules radio dans une zone différente de la cellule radio connectée au terminal radio, et pour juger que la plage de déplacement du terminal radio est dans les limites de la plage prédéterminée lorsqu'une plage de fluctuation des deux qualités radio dans une période prédéterminée est inférieure à une valeur de seuil prédéterminée.

8. Appareil de commande de paramètres radio (30) selon la revendication 1, dans lequel les moyens de jugement de déplacement de terminal radio (32) sont configurés pour juger si la plage de déplacement du terminal radio (1) est dans les limites de la plage prédéterminée sur la base d'informations d'état de déplacement concernant un état de déplacement du terminal radio, dans lequel les informations d'état de déplacement sont obtenues par le terminal radio.

9. Appareil de commande de paramètre radio (30) selon la revendication 8, dans lequel les informations d'état de déplacement comprennent au moins l'une quelconque d'une fréquence Doppler, d'une vitesse de déplacement du terminal radio (1), et d'informations de localisation du terminal radio.

10. Station radio de base (20) comprenant l'appareil de commande de paramètre radio (30) selon l'une quelconque des revendications précédentes.

11. Procédé de commande de paramètre radio pour décider d'un paramètre radio d'une cellule radio (40), le procédé comprenant :
le jugement si une plage de déplacement d'un terminal radio (1) est dans les limites d'une plage prédéterminée ; et
la décision du paramètre radio de la cellule radio (40) sur la base d'informations de mesure de terminal radio qui sont rapportées par le terminal radio dont la plage de déplacement est dans les limites de la plage prédéterminée, dans lequel les informations de mesure de terminal radio sont mesurées par le terminal radio (1) .
